## Europäisches Patentamt

## European Patent Office

## Office européen des brevets

(11) Veröffentlichungsnummer: **0 156 200**
**B1**

(12) **EUROPÄISCHE PATENTSCHRIFT**

(45) Veröffentlichungstag der Patentschrift:
18.10.89

(51) Int. Cl.⁴: **F 23 N 5/00,** G 05 D 11/13,
G 01 N 27/56

(21) Anmeldenummer: 85102463.8

(22) Anmeldetag: 05.03.85

(54) Verfahren und Anordnung zur Bestimmung des Mischungsverhältnisses eines ein Sauerstoffträgergas und einen Brennstoff enthaltenden Gemisches.

(30) Priorität: 08.03.84 DE 3408397

(43) Veröffentlichungstag der Anmeldung:
02.10.85 Patentblatt 85/40

(45) Bekanntmachung des Hinweises auf die Patenterteilung:
18.10.89 Patentblatt 89/42

(84) Benannte Vertragsstaaten:
BE DE FR GB IT LU NL

(56) Entgegenhaltungen:
EP-A- 0 008 151
EP-A- 0 060 681
EP-A- 0 075 369
EP-A- 0 098 716
DE-A- 3 211 533
GB-A- 2 036 290

PATENT ABSTRACTS OF JAPAN, Band 7, Nr. 26, 2. Februar 1983, Seite (P-172)(1171); & JP-A-57-179 738 (YAMATAKE HONEYWELL K.K.) 05-11-1982

(73) Patentinhaber: Ruhrgas Aktiengesellschaft,
Huttropstrasse 60 Postfach 10 32 52,
D-4300 Essen 1 (DE)

(72) Erfinder: Altemark, Detlef, Dr.-Ing., Fuchspass 10,
D-4270 Dorsten 1 (DE)
Erfinder: Weid, Manfred, Parkstrasse 10, D-4358 Haltern (DE)
Erfinder: Brockmann, Eugen, Dr.-Ing., Goethestrasse 12,
D-4270 Dorsten 1 (DE)

(74) Vertreter: Zenz, Joachim Klaus, Dipl.-Ing. et al, ZENZ & HELBER Patentanwälte Am Ruhrstein 1,
D-4300 Essen 1 (DE)

EP 0 156 200 B1

## Beschreibung

Die Erfindung bezieht sich auf eine Verfahren und eine Anordnung zur Bestimmung des Mischungsverhältnisses eines ein Sauerstoffträgergas und einen Brennstoff enthaltenden Gemisches, das in einer Hauptverbrennungseinrichtung verbrannt wird, wobei die thermodynamischen Randbedingungen, d.h. Zusammensetzung, Druck und Temperatur der Mengen des Sauerstoffträgergases und des Brennstoffes vor und nach dem Mischen veränderlich sein können, unter Verwendung einer Nebenverbrennungseinrichtung, in der eine Teilmenge des Brennstoffes mit einer Teilmenge des Sauerstoffträgergases zur Reaktion gebracht wird, wobei aus einer messtechnischen Erfassung des Verbrennungszustandes in der Nebenverbrennungseinrichtung wenigstens ein Signal für eine Messung und/oder Regelung des Mischungsverhältnisses der Hauptverbrennungseinrichtung abgeleitet wird.

Die Bestimmung des Verbrennungszustandes sowie des Mischungsverhältnisses von Sauerstoffträgergas zu Brennstoff an Verbrennungseinrichtungen erfolgt in der Praxis häufig über eine Abgasanalyse im Abgaskanal oder durch Absaugung eines Abgasstromes aus dem Abgaskanal bzw. durch Messung des Mischungsverhältnisses der der Hauptverbrennungseinrichtung zugeführten Mengen. Das auf diese Weise gewonnene Messsignal kann zur Anzeige gebracht werden, um nach den angezeigten Werten die Brenner in bestimmten Zeitabständen einzustellen. Bei stationären, geregelten Anlagen wird das Messsignal geeignet umgesetzt und über einen Regler und geeignete Stellglieder unmittelbar für eine Regelung des Mischungsverhältnisses verwendet. Bei im Abgaskanal angeordneten Messsonden wird das Messsignal zeitlich verzögert gegenüber einer Verstellung der Stellglieder in den Zuführungsleitungen erzeugt, wobei die Zeitverzögerung u.a. von der räumlichen Anordnung der Stellglieder und der Messsonden im Abgaskanal, der Grösse des Feuerungsraumes, dem Durchsatz und dem Verbrennungsablauf abhängig ist. Die Dynamik der Gemischregelung ist dann unmittelbar von der Summe der im geschlossenen Regelkreis auftretenden Verzögerungszeiten, d.h. den Totzeiten und Zeitkonstanten der genannten Systemkomponenten, abhängig. Grosse Verzögerungszeiten haben ein entsprechend träges Regelungsverhalten zur Folge. Dieses träge Regelungsverhalten kann insbesondere bei unterstöchiometrischem Betrieb knapp oberhalb der Russgrenze und bei nahstöchiometrischem Betrieb zu grossen Energieverlusten, hohem Schadstoffauswurf oder sogar Schäden an der Verbrennungseinrichtung bzw. bei Industrieöfen am beheizten Gut führen, wenn Störgrössen auftreten, die eine Änderung des Verbrennungszustandes bewirken.

Vor allem bei geschlossenen Feuerräumen kann als Folge von Undichtigkeiten während der Verbrennung Sekundärluft von aussen eindringen, sich mit dem Abgas vermischen und die Messwerte bei der Abgasanalyse im Abgaskanal verfälschen. Im überstöchiometrischen Bereich kann eine Verfälschung des Messsignals durch unverbrannte Bestandteile im Abgas eintreten. Eine nachträgliche Abgasanalyse zur Bestimmung des primär zugeführten Sauerstoffanteils, z.B. der Luftzahl, ist bei offen wirkenden Verbrennungseinrichtungen, bei denen das Abgas frühzeitig mit aufzuheizender Tertiärluft durchmischt wird, praktisch nicht möglich. Die bei solchen Systemen häufig angewandte Bestimmung, d.h. Messung und/oder Regelung des Mischungsverhältnisses der der Hauptverbrennungseinrichtung zugeführten Mengenströme ist stark brennstoffspezifisch und bedingt eine genaue Kenntnis des eingesetzten Brennstoffes. Bei einfachen Verbundsteuerungen werden ausserdem Druck- und Temperaturänderungen, die das Mischungsverhältnis und den Verbrennungszustand beeinflussen, nicht erfasst. Eine bei Vormischsystemen zur Bestimmung des Mischungsverhältnisses an sich mögliche Analyse charakteristischer unverbrannter Bestandteile des zugeführten Gemisches ist ebenfalls in hohem Masse brennstoffspezifisch.

Aus der US-PS 4 118 172 sind ein Verfahren der eingangs genannten Art sowie eine zugehörige Anordnung für mündungsmischende Hauptverbrennungseinrichtungen bekannt. Der zur Hauptverbrennungseinrichtung parallel geschalteten Nebenverbrennungseinrichtung werden Teilmengen des Sauerstoffträgergases und des Brennstoffes zugeführt. Durch Störwertaufschaltung in Form einer zyklischen Veränderung des Mischungsverhältnisses in der Nebenverbrennungseinrichtung und durch Abtastung der maximalen Flammentemperatur wird ein besonderer Betriebspunkt, nämlich das genaue stöchiometrische Mischungsverhältnis bei konstanter Wärmeleistung, bestimmt. In Abhängigkeit von diesem Betriebspunkt wird das Mischungsverhältnis der Hauptverbrennungseinrichtung um einen bestimmten Wert verschoben gesteuert. Die Nebenverbrennungseinrichtung wird also als Pilotanlage betrieben und zyklisch gestört, um das stöchiometrische Mischungsverhältnis bei konstanter Wärmeleistung in der Nebenverbrennungseinrichtung zu erreichen und danach das Mischungsverhältnis für die Hauptverbrennungseinrichtung zu steuern. Die Dynamik dieses bekannten Systems ist relativ schlecht, da vor einem Steuereingriff zur Änderung des Mischungsverhältnisses des Gasgemisches im System der Hauptverbrennungseinrichtung in der Regel zunächst mehrere Störgrössenänderungen und deren Regelantworten im Pilotsystem abgewartet werden müssen und die Wärmeleistung konstant gehalten werden muss. Zudem ist der bauliche Aufwand des Pilotsystems relativ gross, obwohl im wesentlichen lediglich Brennstoffbeschaffenheitsänderungen erfasst werden können. Vor allem fehlt es bei dem bekannten System an einer Korrelation zwischen den Verbrennungszuständen in der Hauptverbrennungsein-

richtung und in der Nebenverbrennungseinrichtung.

Letzteres gilt auch für ein weiteres bekanntes System nach der GB-A 2 036 290. Dort arbeitet die Nebenverbrennungseinrichtung ebenfalls als Pilotanlage, deren Ausgangssignal mit einem Sollwert verglichen wird. Abweichungen von diesem Sollwert bewirken, dass die Nebenverbrennungseinrichtung und die Hauptverbrennungseinrichtung entsprechend nachgeregelt werden.

Aus der EP-B 0 075 369 und 0 008 151 ist es bekannt, mit Hilfe einer Nebenbrennkammer die Wärmebelastung von Gasfeuerungen zu bestimmen, d.h. zu messen und/oder zu regeln. Dieses bekannte Verfahren hat mit der vorausgesetzten Gattung, d.h. der Bestimmung des Mischungsverhältnisses eines in einer Hauptverbrennungseinrichtung verbrannten Gasgemisches, nichts zu tun.

Der vorliegenden Erfindung liegt die Aufgabe zugrunde, ein Verfahren und eine Anordnung der eingangs genannten Art zu schaffen, mit deren Hilfe das Mischungsverhältnis von Brennstoff und Sauerstoffträgergas schnell und mit hoher Genauigkeit und Zuverlässigkeit bestimmt, d.h. gemessen und/oder geregelt werden kann. Das Verfahren soll dabei mit prinzipiell gleichen Vorteilen sowohl auf Vormischbrennsysteme als auch auf Mündungsmischbrennsysteme anwendbar sein und sich zur Abbildung sowohl des unterstöchiometrischen als auch überstöchiometrischen Verbrennungszustandes der Hauptverbrennungseinrichtung eignen. In Weiterbildung der Erfindung soll eine Möglichkeit geschaffen werden, ggf. wichtige, für die Einstellung der Hauptverbrennungseinrichtung benötigte brennstoffspezifische Kenngrössen zu berechnen und auszugeben.

Das erfindungsgemässe Verfahren zeichnet sich zur Lösung dieser Aufgabe dadurch aus, dass die Nebenverbrennungseinrichtung als Referenzbrennkammer betrieben wird, dass für die Reaktion in der Referenzbrennkammer ein Gemisch verwendet wird, das zu dem in der Hauptverbrennungseinrichtung zur Verbrennung kommenden Gemisch analog ist, und dass das Gemisch in der Referenzbrennkammer derart zur Reaktion gebracht wird, dass an der Referenzbrennkammer die Verbrennung und die thermodynamischen Randbedingungen (Zusammensetzung, Druck, Temperatur) der Hauptverbrennungseinrichtung analog abgebildet werden. Anders als beim zuvor erörterten Stand der Technik ist die Nebenverbrennungseinrichtung bei der Erfindung durch den Begriff «Referenzbrennkammer» zutreffend zu definieren, da der Verbrennungszustand der Referenzbrennkammer wegen der analogen Verknüpfungen zur Hauptverbrennungseinrichtung unmittelbar eine Referenz für den Verbrennungszustand der Hauptverbrennungseinrichtung ist.

Mit Hilfe des erfindungsgemässen Verfahrens lässt sich die Verbrennung in der Hauptverbrennungseinrichtung unter identischen Randbedingungen simulieren, also eine Verknüpfung beider Verbrennungszustände in sehr einfacher Weise erreichen. Die an der Referenzbrennkammer durch messtechnische Analyse gewonnenen Erkenntnisse können dann durch Messung und gegebenenfalls Nachsteuerung oder durch Regelung unmittelbar auf die Hauptverbrennungseinrichtung übertragen werden. Die Referenzbrennkammer ist für die messtechnische Analyse einfacher zu handhaben und leichter zugänglich als ein im Abgaskanal untergebrachtes Messsystem. Kurze Zuleitungen zu dem für die Messung massgeblichen System der Referenzbrennkammer, kurze Reaktions- und Verweilzeiten innerhalb der Referenzbrennkammer sowie ggf. die Möglichkeit, frühzeitig Teilmengen aus den Zuführungsleitungen der Hauptverbrennungseinrichtung abzuzweigen, gewährleisten ein schnelles Regelungsverhalten und eine Verbesserung der Dynamik. Durch die Entnahme noch nicht reagierter Teilmengen von Brennstoff, Sauerstoffträgergas oder eines Gemisches aus beiden und Reaktion in der verhältnismässig kleinen, gut abdichtbaren Referenzbrennkammer können Undichtigkeiten und Messungenauigkeiten zumindest vernachlässigbar gering gehalten werden.

Daher ermöglicht die Erfindung eine Verringerung des baulichen Aufwandes, eine funktionelle Vereinfachung der Messung und/oder Regelung und eine geringere Störanfälligkeit sowohl der beteiligten Systemkomponenten als auch der gesamten Steuerstrecke bzw. des geschlossenen Regelkreises.

Die Simulation der Verbrennung sowie thermodynamischer Randbedingungen von vormischenden Hauptverbrennungseinrichtungen wird in Weiterbildung der Erfindung dadurch begünstigt, dass eine Teilmenge des dort zugeführten Gemisches der Referenzbrennkammer direkt über einen einstellbaren Strömungswiderstand zugeführt wird. Bei mündungsmischenden Hauptverbrennungseinrichtungen werden Teilmengen des Sauerstoffträgergases und des Brennstoffs über einstellbare Strömungswiderstände der Referenzbrennkammer zugeführt. In beiden Fällen sollen vorzugsweise Temperatur- und/oder Druckänderungen im System der Hauptverbrennungseinrichtung auch den Verbrennungszustand der Referenzbrennkammer in vorgegebener analoger Weise verändern; sie können aber auch indirekt durch Messung berücksichtigt werden. Dementsprechend ist es vorteilhaft, dass die Druckdifferenzen über den Strömungswiderständen oder das Verhältnis der Druckdifferenzen gemessen und/oder geregelt werden.

Die Gewinnung eines oder mehrerer Signale für die Messung und/oder Regelung des Gemisches der Hauptverbrennungseinrichtung erfolgt vorzugsweise durch messtechnische Analyse der Reaktionsprodukte der Referenzbrennkammer. Vorteilhafterweise wird mindestens ein Signal aus der messtechnischen Erfassung des $O_2$-Anteils oder des $O_2$-Partialdrucks oder des Anteils oder des Partialdrucks einer inerten Komponente, wie z.B. $CO_2$, $H_2O$, $N_2$, der Reaktionsprodukte

der Referenzbrennkammer abgeleitet, wobei es ganz besonders günstig ist, wenn die Signalableitung in zusätzlicher Abhängigkeit von dem CO-Anteil oder dem CO-Partialdruck oder dem Anteil oder Partialdruck einer anderen oder mehrerer unverbrannter Komponenten, z.B. $H_2$, $C_xH_y$ o. dgl., der Reaktionsprodukte erfolgt.

Prinzipiell kann aber auch ein Teilstrom des Abgases der Hauptverbrennungseinrichtung durch die Referenzbrennkammer geleitet werden, wobei der Referenzbrennkammer in diesem Falle die Funktion einer Messkammer mit dem Vorteil zukommt, dass durch Umsetzung brennbarer Bestandteile eine exakte Bestimmung des Mischungsverhältnisses möglich ist.

Erfindungsgemäss kann ein Teilstrom eines in der Hauptverbrennungseinrichtung teilweise reagierten Gemisches durch die Referenzbrennkammer geleitet und der Verbrennungszustand in der Referenzkammer zur Gewinnung mindestens eines Signals für die Messung und/oder Regelung des Gemisches der Hauptverbrennungseinrichtung messtechnisch erfasst werden. In der Referenzbrennkammer kann dann die Reaktion analog zur Hauptverbrennungseinrichtung ablaufen gelassen, lokal der Verbrennungszustand oder die Luftzahl bestimmt und das Gemisch der Hauptverbrennungseinrichtung durch eine Referenzstelle, in der z.B. noch kein Falschlufteintritt wirksam ist, gesteuert werden.

Durch beispielsweise elektrische Beheizung der Referenzbrennkammer kann sichergestellt werden, dass das Brennstoff-/Sauerstoffträgergasgemisch innerhalb eines weiten Bereiches von Mischungsverhältnissen zum Zünden gebracht wird und vollständig oder reproduzierbar analog zur Hauptverbrennungseinrichtung verbrennt. Für bestimmte Anwendungsfälle ist es zweckmässig, die Beheizung der Referenzbrennkammer so zu regeln, dass in letzterer eine bestimmte Temperatur erreicht und/oder aufrechterhalten wird. Eine andere Möglichkeit zur Beeinflussung des Zünd- und Reaktionsablaufs und der Herstellung des Verbrennungszustandes (Reaktionszustandes) bietet der Einsatz von Katalysatoren, wie sie z.B. auch in Anlagen zur Schutz- und Reaktionsgaserzeugung verwendet werden.

Vorzugsweise werden die die Referenzbrennkammer durchströmende Gemischmenge und damit die Verweilzeit der Reaktionsprodukte in der Referenzbrennkammer im wesentlichen konstant gehalten.

Die erfindungsgemässe Anordnung zur Bestimmung des Mischungsverhältnisses des ein Sauerstoffträgergas und einen Brennstoff enthaltenden Gemisches, das in einer Hauptverbrennungseinrichtung verbrannt wird, weist eine Nebenverbrennungseinrichtung, der parallel zur Hauptverbrennungseinrichtung Teilmengen des Brennstoffes und des Sauerstoffträgergases oder eines Gemisches aus beiden zuführbar sind und in der die Teilmengen zur Reaktion bringbar sind, und eine Verbrennungsparameter in der Nebenverbrennungseinrichtung erfassende Mess- und Auswerteeinrichtung auf. Hiervon ausgehend ist die erfindungsgemässe Anordnung dadurch gekennzeichnet, dass die Nebenverbrennungseinrichtung als Referenzbrennkammer vorgesehen und parallel zur Hauptverbrennungseinrichtung derart angeordnet ist, dass in der Referenzbrennkammer unter analoger Abbildung der Verbrennung und der thermodynamischen Randbedingungen der Hauptverbrennungseinrichtung ein Gemisch zur Reaktion gebracht wird, welches dem in der Hauptverbrennungseinrichtung zur Verbrennung kommenden Gemisch analog ist. Die Referenzbrennkammer oder zumindest deren Auskleidung besteht aus einem temperaturbeständigen Material, vorzugsweise aus Glas oder einem keramischen Material.

Bei einem bevorzugten Ausführungsbeispiel der Erfindung ist mit der Referenzbrennkammer eine Messkammer zur messtechnischen Erfassung des Verbrennungszustandes in der Referenzbrennkammer verbunden. Zur Erfassung des $O_2$-Anteils oder des $O_2$-Partialdrucks sind eine Zirkondioxidmesszelle und ein Temperaturfühler in die Messkammer eingebaut, wobei sich die Messkammer vorzugsweise unmittelbar an die Referenzbrennkammer anschliesst.

Messkammer und Referenzbrennkammer können mit einer gemeinsamen, beispielsweise einer die Referenzbrennkammer und die Messkammer spiralförmig umgebenden elektrischen Heizdrahtwendel versehen sein. Dabei ist vorzugsweise eine elektrische Heizleiteranordnung direkt auf der Referenzbrennkammer (9) beispielsweise in Dickschichttechnik aufgebracht.

Die den Verbrennungszustand in der Referenzbrennkammer messtechnisch erfassenden Fühler und Sonden sind bei einem bevorzugten Ausführungsbeispiel der Erfindung mit einer einen Rechner enthaltenden Auswerteeinheit verbunden. In dieser werden die aus der messtechnischen Erfassung des Verbrennungszustandes abgeleiteten Signale in physikalische Grössen umgerechnet, Kenngrössen berechnet und in geeignete Signale umgesetzt, die als Messwerte ausgegeben werden oder als Eingabegrössen für die Gemischregelung der Hauptverbrennungseinrichtung dienen. Der Rechner kann ausserdem so ausgebildet sein, dass er die Verbrennung charakterisierende Kenngrössen berechnet. Hierzu gehören insbesondere im überstöchiometrischen Bereich die Luftzahl und der Norm-Wobbe-Index, der Brenn- und Heizwert, die Dichten von Sauerstoffträgergas und Brennstoff und deren Verhältnis. Der Rechner kann mit einer geeigneten Einrichtung zur Eingabe brennstoffspezifischer Grössen zur sehr genauen Berechnung der Kenngrössen versehen sein.

Bei geeigneter Einfügung in einen geschlossenen Regelkreis kann der Rechner als digitaler Regler beispielsweise bei der Regelung der Beheizung der Referenzbrennkammer und/oder zur Regelung des Gemisches der Hauptverbrennungseinrichtung verwendet werden.

Die Erfindung findet ihre bevorzugte Anwendung bei vormischenden Feuerungssystemen, lässt sich aber mit praktisch gleichen Vorteilen bei mündungsmischenden Verbrennungseinrichtungen anwenden. Die erfindungsgemässe Anordnung ist in Form von Handmessgeräten für die Brennereinstellung realisierbar, sie kann aber auch als stationäres Regelgerät vorgesehen sein und ist für unter- und überstöchiometrische Verbrennung einsetzbar. Die Erfindung ist nachfolgend anhand von in der Zeichnung schematisch dargestellten Ausführungsbeispielen näher erläutert. In der Zeichnung zeigen:

Fig. 1 ein Ausführungsbeispiel der erfindungsgemässen Anordnung in einem System mit vormischender Hauptverbrennungseinrichtung;

Fig. 2 ein Ausführungsbeispiel der erfindungsgemässen Anordnung in einem mündungsmischenden Verbrennungssystem;

Fig. 3A und 3B schematisch zwei Ausführungsformen der bei der Erfindung verwendeten Referenzbrennkammer; und

Fig. 4 eine elektrisch beheizte Referenzbrennkammer, die mit einer unmittelbar anschliessenden Messkammer wärmeisoliert in einem gemeinsamen Gehäuse angeordnet ist, wobei in die Messkammer eine Zirkondioxid-Messzelle mit Thermoelement eintaucht.

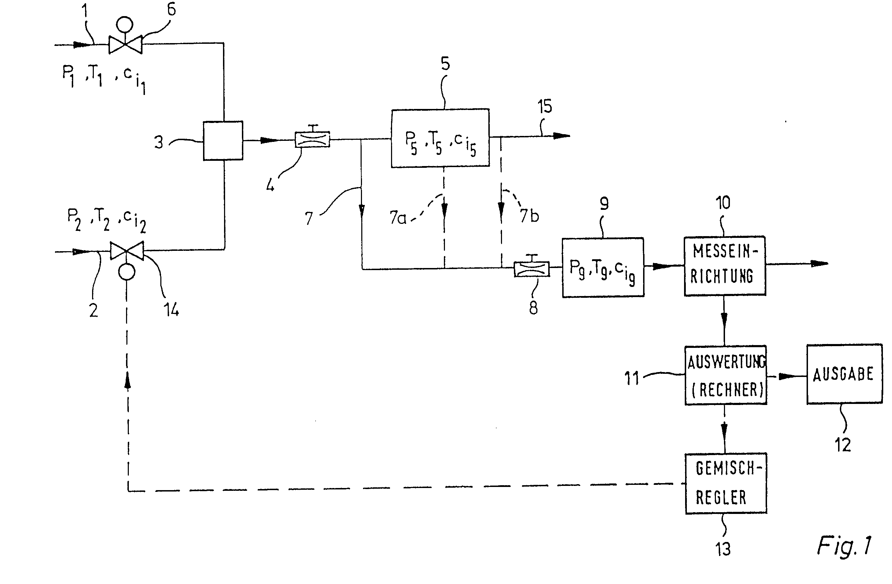

Bei dem System gemäss Fig. 1 werden der Brennstoff aus der Hauptleitung 1 und das Sauerstoffträgergas aus der Hauptleitung 2 in einer Mischvorrichtung 3 gemischt. Das Gemisch wird über einen einstellbaren Strömungswiderstand 4 der Hauptverbrennungseinrichtung 5 zugeführt. Die Wärmeleistung der Hauptverbrennungseinrichtung 5 wird über einen hier als Stellventil 6 ausgebildeten einstellbaren Strömungswiderstand reguliert. Eine Teilmenge des unverbrannten Gemischs wird über eine Probegasleitung 7 abgezweigt und über einen einstellbaren Strömungswiderstand 8 zu einer Referenzkammer 9 geleitet. In letzterer wird das Gemisch vollkommen oder reproduzierbar analog zur Hauptverbrennungseinrichtung 5 verbrannt.

Mit der Referenzbrennkammer 9 ist eine Messeinrichtung 10 verbunden, die der messtechnischen Erfassung des Verbrennungszustandes in der Referenzbrennkammer 9 beispielsweise durch messtechnische Analyse der Reaktionsprodukte der Referenzbrennkammer dient und mindestens ein Signal für die Messung und Anzeige bzw. Regelung des Gemisches der Hauptverbrennungseinrichtung 5 entwickelt. Dieses Signal wird zu einer Auswerteeinheit 11 übertragen, die in dem beschriebenen Ausführungsbeispiel einen Rechner enthält. Letzterer berechnet Kenngrössen, die den Verbrennungszustand in der Referenzbrennkammer 9 charakterisieren, und diese Kenngrössen werden in Signale umgesetzt, die über eine Ausgabeeinrichtung 12 angezeigt oder dort ausgedruckt oder als Eingabewerte für einen Gemischregler 13 der Hauptverbrennungseinrichtung 5 verwendet werden können. Der Gemischregler 13 kann dabei analog oder digital und ganz oder teilweise Bestandteil des Rechners der Auswerteeinheit 11 sein. Das Regelsignal des Gemischreglers 13 wirkt auf ein Stellglied 14 und regelt das Mischungsverhältnis durch Mengenänderung des Sauerstoffträgergases. In alternativer Anordnung kann aber auch die Wärmebelastung über das Sauerstoffträgergas, d.h. über das Stellventil 14 und das Mischungsverhältnis über den Brennstoff, d.h. das Stellventil 6, geregelt werden, oder es können die Ventile 6 und 14 in geeigneter Weise gekoppelt sein.

Die thermodynamischen Randbedingungen der Sauerstoffträgergas- und Brennstoffströme in den Hauptleitungen 1 und 2, d.h. die Drücke $p_1$ und $p_2$, die Temperaturen $T_1$ und $T_2$ sowie die Konzentrationen $c_{i1}$ und $c_{i2}$ sind im Betrieb Änderungen unterworfen. Um den Verbrennungszustand in der Hauptverbrennungseinrichtung 5 in der zu dieser parallel geschalteten Referenzbrennkammer 9 genau simulieren zu können, sind Massnahmen getroffen, damit Änderungen von Temperatur ($T_5$) und/oder Druck ($p_5$) im System der Hauptverbrennungseinrichtung 5 in reproduzierbar, d.h. vorgegebener analoger Weise den Verbrennungszustand (charakterisiert durch $p_9$ und $T_9$) in der Referenzbrennkammer 9 beeinflussen. Dies kann z.B. dadurch geschehen, dass die Drücke $p_5$ und $p_9$ durch Einleitung der Reaktionsprodukte der Referenzbrennkammer 9 in die Abgasleitung 15 auf annähernd gleicher Höhe gehalten werden und/oder dass die Referenzbrennkammer 9 entsprechend beheizt bzw. abgekühlt wird. Das durch die Messeinrichtung aus der messtechnischen Erfassung des Verbrennungszustandes in der Referenzbrennkammer 9 gewonnene Messergebnis ist daher für den Verbrennungszustand in der Hauptverbrennungseinrichtung 5 ebenso repräsentativ wie für denjenigen in der Referenzbrennkammer 9. Insofern können die aus der messtechnischen Erfassung des Verbrennungszustandes in der Referenzbrennkammer 9 gewonnenen Messgrössen auch für die stationäre Regelung der Hauptverbrennungseinrichtung 5 verwendet werden, wobei der Regelkreis über die Auswerteeinrichtung 11, den Gemischregler 13 zurück zum Stellglied 14 geschlossen ist.

Anstelle der Entnahme des unverbrannten Gemisches über die Probegasleitung 7 kann auch ein Teilstrom eines in der Hauptverbrennungseinrichtung 5 teilweise reagierten Gemisches von einem geeigneten Ort in der Hauptverbrennungseinrichtung 5 abgezweigt und über die Probegasleitung 7a sowie einen einstellbaren Strömungswiderstand 8 in die Referenzbrennkammer 9 geleitet werden. Alternativ kann auch das nicht vollständig ausreagierte Abgas der Hauptverbrennungseinrichtung 5 aus deren Abgasleitung 15 über eine Probegasleitung 7b in einer Teilmenge abgezogen und über den einstellbaren Strömungswiderstand 8 in die Referenzbrennkammer 9 geleitet werden. Eine Verstellung des Strömungswiderstandes 8 verändert den Durchsatz und damit die Verweilzeit der Reaktionskomponenten in der Referenzbrennkammer 9.

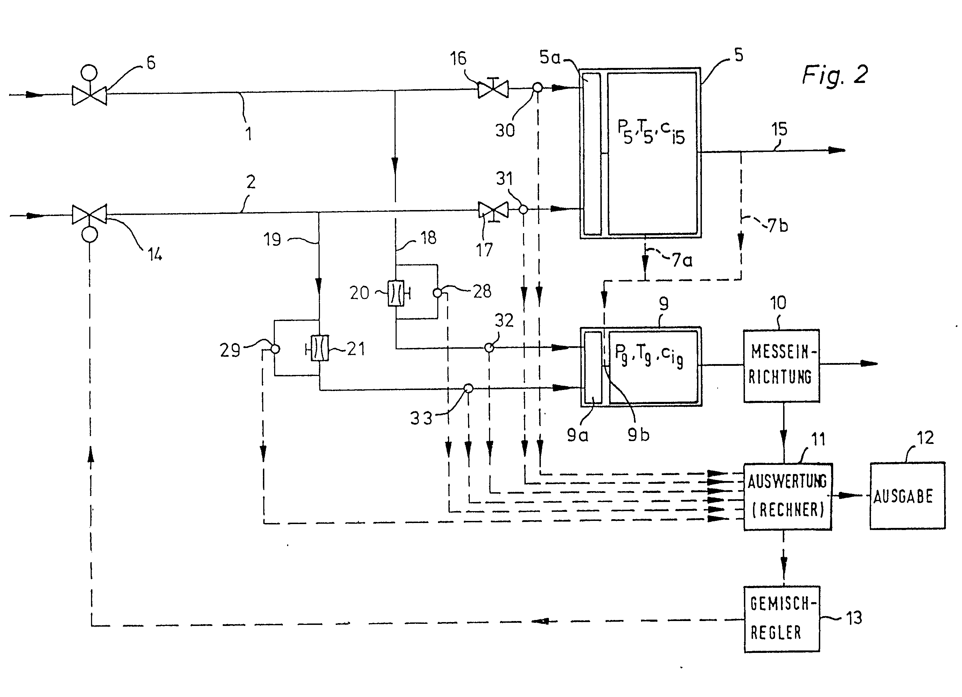

In Fig. 2 ist ein mündungsmischendes System dargestellt. Der Brennstoff wird über die Hauptleitung 1 und das Sauerstoffträgergas über die Hauptleitung 2 jeweils über die Stellventile 6 bzw. 14 sowie einstellbare Strömungswiderstände 16 bzw. 17 der mit einem Mündungsmischer 5a versehenen Hauptverbrennungseinrichtung 5 unmittelbar zugeführt. Aus den Hauptleitungen 1 und 2 werden Teilmengen über Probegasleitungen 18 bzw. 19 abgezweigt und über einstellbare Strömungswiderstände 20 und 21 der Referenzbrennkammer 9 zugeführt. Der der Referenzbrennkammer 9 vorgeschaltete Mischer 9a kann entweder ein dem Mündungsmischer 5a der Hauptverbrennungseinrichtung 5 analog nachgebildeter Mündungsmischer oder als separate Vormischeinrichtung ausgebildet sein. Die messtechnische Erfassung des Verbrennungszustandes in der Referenzbrennkammer 9 und die Nutzung der daraus gewonnenen Messgrössen können in gleicher Weise wie bei dem Vormischsystem gemäss Fig. 1 zur Bestimmung, d.h. Messung, Steuerung oder Regelung des Mischungsverhältnisses der Mengen in den Hauptleitungen 1 und 2 verwendet werden. Wie bei dem Vormischsystem kann auch hier eine Probegasentnahme über Probegasleitungen 7a oder 7b vorgenommen werden, wobei das Probegas an einer geeigneten Stelle 9b hinter dem Mischer 9a in die Referenzbrennkammer 9 eingeleitet wird.

Zum Herstellen der Simulationsbedingung sind geeignete Massnahmen getroffen, damit Änderungen von Druck ($p_5$) und/oder Temperatur ($T_5$) im System der Hauptverbrennungseinrichtung 5 in reproduzierbar analoger Weise den Verbrennungszustand (charakterisiert durch $p_9$ und $T_9$) in der Referenzbrennkammer 9 beeinflussen. Bei dem in Fig. 2 schematisch dargestellten Ausführungsbeispiel werden zu diesem Zweck die Temperaturen an den Messstellen 30, 31, 32 und 33 gemessen, von der Auswerteeinrichtung 11 erfasst und in deren Rechner verarbeitet. Anstelle einer Messung der Temperaturen an den Messstellenpaaren 30, 31 und 32, 33 kann jeweils eines dieser Paare auf die gleiche Temperatur gebracht werden. Im Gegensatz zu Vormischsystemen muss bei mündungsgemischten Systemen zusätzlich zur Verbrennung auch die Gemischbildung simuliert werden. Während Druckänderungen in den Zuleitungen 1 und 2 von der Referenzkammer erfasst werden, wirken unterschiedliche Änderungen der Temperaturverhältnisse an den einstellbaren Strömungswiderständen 16 und 17 sowie 20 und 21 bzw. an den Messstellen 30 und 31 sowie 32 und 33 unterschiedlich auf die Bildung des Mischungsverhältnisses der der Hauptverbrennungseinrichtung 5 und Referenzbrennkammer 9 zugeführten Gemische.

Durch Messung verschiedener zusätzlicher Grössen können mit dem Rechner 11 verschiedene weitere brennstoffspezifische Kenngrössen bestimmt werden. Als Grundlage der Berechnung von Norm-Brennwert [$Ho_{,n}$ (n steht für «Norm»)] Norm-Heizwert $Hu_{,n}$, Betriebs-Brennwert, Betriebs-Heizwert, unterem und oberem Norm- und Betriebs-Wobbe-Index werden die Definitionsgleichung der Luftzahl ($\lambda$), die existierende Korrelationsfunktion $f_\alpha$ (...), mit $\alpha =$ o für den Brennwert und $\alpha =$ u für den Heizwert, zwischen dem stöchiometrischen Luftbedarf $1^{st}$ (Luftbedarf für eine vollständige Verbrennung ohne Luftüber- oder -unterschuss) und dem Norm-Brennwert $Ho_{,n}$ ($\alpha =$ o) und dem Norm-Heizwert $Hu_{,n}$ ($\alpha =$ u) verwendet. Danach gilt die Beziehung

$$H_{\alpha,n} = f_\alpha \left[ \frac{1}{\lambda \, (c_{i9})} \cdot \frac{\dot{N}_{O_2}}{\dot{N}_b} \right]$$

wobei $\dot{N}_{O_2}/\dot{N}_b$ das Verhältnis der der Referenzbrennkammer zugeführten Mengenströme von Sauerstoffträgergas und Brennstoff und $\alpha$ ($c_{i9}$) die aus der Abgaszusammensetzung berechnete Luftzahl ist. Die Luftzahl kann aus den gemessenen Mengenanteilen der Reaktionsprodukte in bekannter Weise berechnet werden. Im überstöchiometrischen Bereich reicht dazu die Bestimmung eines inerten Mengenanteils aus. Für die Berechnung der Luftzahl in diesem Bereich ist besonders der $O_2$-Mengenanteil im Abgas geeignet. Zur genauen Bestimmung muss der Feuchtigkeitsgehalt im Sauerstoffträgergasstrom durch Trocknung eliminiert oder durch Messung berücksichtigt werden. Die weiteren brennstoffspezifischen Grössen lassen sich berechnen, wenn Druck und Temperatur des der Referenzbrennkammer zugeführten Brennstoffmengenstromes bzw. zusätzlich die Dichten oder das Verhältnis der Dichten des Sauerstoffträgergases und Brennstoffes gemessen und bestimmt werden und zur Berechnung der brennstoffspezifischen Kenngrössen die entsprechenden Definitionsgleichungen verwendet werden. Zur Bestimmung der Betriebs-Brenn- und Betriebs-Heizwerte müssen beispielsweise die Brennstofftemperatur an der Messstelle 32 und der absolute Brennstoffdruck gemessen werden. Dabei kommt es darauf an, dass die Temperaturen und Drücke an den für die Gemischbildung relevanten Strömungswiderständen gemessen werden. Werden zusätzlich die Dichten oder das Dichteverhältnis erfasst, so kann ebenfalls mit der entsprechenden Definitionsgleichung der obere und untere Norm- und Betriebs-Wobbe-Index bestimmt werden.

Die als Ausgangspunkt für die Berechnung des Norm-Brennwertes bzw. des Norm-Heizwertes benötigten Mengenströme lassen sich nicht ohne weiteres direkt messen. Deshalb wird die Mengenstrommessung häufig indirekt mittels bekannter Durchflussgleichungen nach dem Wirkdruckverfahren berechnet. Bei dieser indirekten Messung lässt sich zunächst ohne Kenntnis der Dichten durch die Kenntnis des Drosselquerschnittes der einstellbaren Strömungswiderstände 20 und 21, der Druckdifferenzen über den einstellbaren Strömungswiderständen 20 und 21, der absoluten Gasdrücke an den Messstellen 28 und 29 und der Temperaturen an den Messstellen 32 und 33 mittels der Luftzahl $\lambda(c_{i9})$ der untere und obere Norm- und Betriebs-Wobbe-Index mit der Auswerteeinheit 10 berechnen. Werden ausserdem zusätzlich die Dichten oder das Verhältnis der Dichten des Sauerstoffträgergases zum Brennstoff bestimmt, so lassen sich auch mit diesem Verfahren mit den entsprechenden Definitionsgleichungen der Norm-Brennwert und Norm-Heizwert sowie der Betriebs-Brennwert und der Betriebs-Heizwert in der Auswerteeinheit 10 berechnen.

Ohne die Simulationsbedinungen zu stören, kann häufig die Auswertung der brennstoffspezifischen Kenngrössen vereinfacht und der Messaufwand verringert werde, indem beispielsweise das Verhältnis der Temperaturen der Messstellen 32 und 33 z. B. durch Wärmetausch und/oder das Verhältnis der Druckdifferenzen über den Strömungswiderständen 20 und 21 und/oder der Absolutdrücke an den Messstellen 28 und 29 konstant, ggf. kurzzeitig für die Auswertung konstant gehalten werden. Die Grössen, die während der Auswertezeit annähernd konstant sind, können als Konstanten in den Rechner eingegeben werden, so dass sich eine Messung dieser Grössen erübrigt.

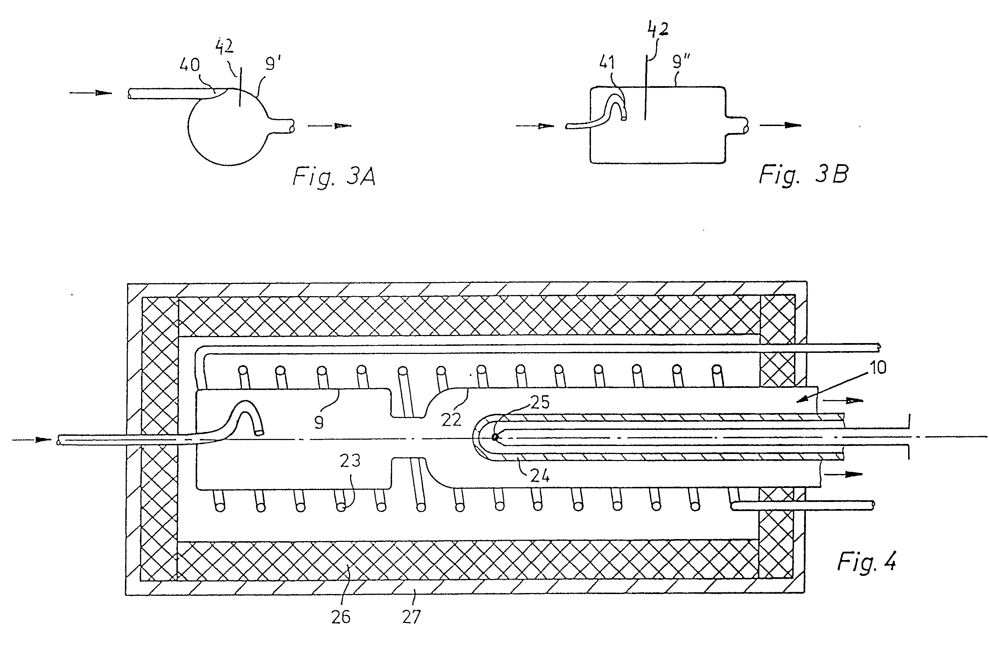

Die Fig. 3A und 3B zeigen zwei bevorzugte Ausführungsformen der Referenzbrennkammer 9. In beiden Fällen besteht die Referenzbrennkammer bzw. deren Auskleidung aus einem temperaturbeständigen Material, vorzugsweise aus Glas oder einem keramischen Material. Die Referenzbrennkammer 9' gemäss Fig. 3A ist mit einem Gemisch-Einlassstutzen 40 verbunden, der im wesentlichen tangential in die sphärische Referenzbrennkammer 9' mündet und so ausgebildet ist, dass das Gemisch auch tangential in die Referenzbrennkammer eingedüst wird. Die in Fig. 3B dargestellte Referenzbrennkammer 9" hat zylindrische Ausbildung. Der Gemischeinlassstutzen 41 ist so ausgebildet und angeordnet, dass er das Gemisch spiralförmig in den Innenraum der Kammer 9" eindüst, so dass der Gemischstrom einen Drall erhält. Beide Ausführungsformen weisen eine Zündeinrichtung 42 auf.

In Fig. 4 ist ein Ausführungsbeispiel gezeigt, bei dem die Referenzbrennkammer 9 und die Messeinrichtung 10 zu einer Einheit zusammengefasst und in einem gemeinsamen Gehäuse untergebracht sind. Die Messeinrichtung 10 weist eine Messkammer 22A auf, die unmittelbar an die Referenzbrennkammer 9 angeschlossen ist und gemeinsam mit dieser von einer Heizwendel 23 beheizt wird. In die Messkammer 22 taucht eine Zirkondioxid-Messzelle 24 mit einem Thermoelement 25 ein. Letzteres wird sowohl für die Messung des $O_2$-Gehalts mittels der Zirkondioxid-Messzelle 24 als auch für die Temperaturregelung von Referenzbrennkammer 9 und Messeinrichtung 10 mittels der Heizwendel 23 verwendet. Die gesamte Einheit ist von einer Wärmeisolation 26 und einem Gehäuse 27 umgeben.

**Patentansprüche**

1. Verfahren zur Bestimmung des Mischungsverhältnisses eines ein Sauerstoffträgergas und einen Brennstoff enthaltenden Gemisches, das in einer Hauptverbrennungseinrichtung (5) verbrannt wird, wobei die thermodynamischen Randbedingungen, d.h. Zusammensetzung, Druck und Temperatur der Mengen des Sauerstoffträgergases und des Brennstoffes vor und nach dem Mischen veränderlich sein können, unter Verwendung einer Nebenverbrennungseinrichtung (9), in der eine Teilmenge des Brennstoffes mit einer Teilmenge des Sauerstoffträgergases zur Reaktion gebracht wird, wobei aus einer messtechnischen Erfassung des Verbrennungszustandes in der Nebenverbrennungseinrichtung wenigstens ein Signal für eine Messung und/oder Regelung des Mischungsverhältnisses der Hauptverbrennungseinrichtung abgeleitet wird, dadurch gekennzeichnet, dass die Nebenverbrennungseinrichtung (9) als Referenzbrennkammer betrieben wird, dass für die Reaktion in der Referenzbrennkammer ein Gemisch verwendet wird, das zu dem in der Hauptverbrennungseinrichtung (5) zur Verbrennung kommenden Gemisch analog ist, und dass das Gemisch in der Referenzbrennkammer derart zur Reaktion gebracht wird, dass an der Referenzbrennkammer die Verbrennung und die thermodynamischen Randbedingungen der Hauptverbrennungseinrichtung analog abgebildet werden.

2. Verfahren nach Anspruch 1, dadurch gekennzeichnet, dass das mindestens eine Signal für die Messung und/oder Regelung des Gemisches der Hauptverbrennungseinrichtung aus einer messtechnischen Analyse der Reaktionsprodukte der Referenzbrennkammer abgeleitet wird.

3. Verfahren nach Anspruch 2, dadurch gekennzeichnet, dass ein Teilstrom eines in der Hauptverbrennungseinrichtung teilweise reagierten Gemisches durch die Referenzbrennkammer geleitet und der Verbrennungszustand in der Referenzbrennkammer zur Gewinnung mindestens eines Signals für die Messung und/oder Regelung des Gemisches der Hauptverbrennungseinrichtung messtechnisch erfasst wird.

4. Verfahren nach Anspruch 2 oder 3, dadurch gekennzeichnet, dass mindestens ein Signal aus der messtechnischen Erfassung des $O_2$-Anteils oder des $O_2$-Partialdrucks oder des Anteils oder des Partialdrucks einer inerten Komponente, wie z.B. $CO_2$, $H_2O$, $N_2$, der Reaktionsprodukte der Referenzbrennkammer abgeleitet wird.

5. Verfahren nach Anspruch 4, dadurch gekennzeichnet, dass die Signalableitung in zusätzlicher Abhängigkeit von dem CO-Anteil oder dem CO-Partialdruck oder dem Anteil oder Partialdruck einer anderen oder mehrerer unverbrannter Komponenten, z.B. $H_2$, $C_xH_y$ o.dgl., der Reaktionsprodukte erfolgt.

6. Verfahren nach einem der Ansprüche 1 bis 5, dadurch gekennzeichnet, dass der Verbrennungszustand der Referenzbrennkammer in vorgegebener Abhängigkeit von Temperatur- und/oder Druckänderungen im System der Hauptverbrennungseinrichtung gesteuert wird.

7. Verfahren nach einem der Ansprüche 1 bis 6, dadurch gekennzeichnet, dass die Referenzbrennkammer derart beheizt wird, dass das Gemisch in einem weiten Bereich von Mischungsverhältnissen in der Referenzbrennkammer zum Zünden und zu einer vollkommenen oder derjenigen in der Hauptverbrennungseinrichtung reproduzierbar analogen Reaktion gebracht wird und die Komponenten der Reaktionsprodukte ihr durch die Temperatur und den Druck bestimmtes Gleichgewicht erreichen.

8. Verfahren nach einem der Ansprüche 1 bis 7, dadurch gekennzeichnet, dass eine Teilmenge des der Hauptverbrennungseinrichtung zugeführten Gemisches der Referenzkammer direkt über einen einstellbaren Strömungswiderstand (8) zugeführt wird oder dass Teilmengen des Sauerstoffträgergases und des Brennstoffs über einstellbare Strömungswiderstände (20, 21) der Referenzbrennkammer zugeführt werden.

9. Verfahren nach Anspruch 8, dadurch gekennzeichnet, dass die Druckdifferenzen über den Strömungswiderständen oder das Verhältnis der Druckdifferenzen gemessen und/oder geregelt werden.

10. Verfahren nach einem der Ansprüche 1 bis 9, dadurch gekennzeichnet, dass das Gemisch in der Referenzbrennkammer katalytisch zur Reaktion gebracht wird.

11. Verfahren nach einem der Ansprüche 1 bis 10, dadurch gekennzeichnet, dass die die Referenzbrennkammer durchströmende Gemischmenge und damit die Verweilzeit der Reaktionsprodukte in der Referenzbrennkammer im wesentlichen konstant gehalten werden.

12. Verfahren nach einem der Ansprüche 1 bis 11, dadurch gekennzeichnet, dass die aus der messtechnischen Erfassung des Verbrennungszustandes in der Referenzbrennkammer abgeleiteten Signale in physikalische Grössen umgesetzt, Kenngrössen berechnet und in geeignete Signale umgeformt werden, die als Messwerte angezeigt und/oder ausgedruckt und/oder als Eingabewerte für eine Gemischregelung der Hauptverbrennungseinrichtung verwendet werden.

13. Verfahren nach Anspruch 12, dadurch gekennzeichnet, dass aus der messtechnischen Erfassung der Reaktionsprodukte, vorzugsweise des $O_2$-Anteils oder $O_2$-Partialdruckes oder eines inerten Anteils oder des Partialdruckes eines inerten Reaktionsproduktes die Luftzahl mit einem Rechner (11) berechnet und ggf. angezeigt wird.

14. Verfahren nach einem der Ansprüche 1 bis 13, dadurch gekennzeichnet, dass die der Referenzkammer (9) zugeführten Teilmengenströme des Sauerstoffträgergases und des Brennstoffes oder das Verhältnis dieser Teilmengen gemessen oder bestimmt werden, dass eine Abgasanalyse durchgeführt wird und dass mittels der aus der Abgasanalyse berechneten Luftzahl der Norm-Brennwert und/oder Norm-Heizwert mit einem Rechner (11) berechnet und ggf. angezeigt werden.

15. Verfahren nach Anspruch 14, dadurch gekennzeichnet, dass durch zusätzliche Messungen oder Berücksichtigungen des Druckes und der Temperatur des der Referenzbrennkammer zugeführten Brennstoffmengenstromes der Betriebs-Brennwert und Betriebs-Heizwert mit einem Rechner berechnet und ggf. angezeigt werden.

16. Verfahren nach Anspruch 14 oder 15, dadurch gekennzeichnet, dass zusätzlich die Dichten oder das Verhältnis der Dichten des Sauerstoffträgergases und Brennstoffes erfasst und mit einem Rechner der untere und obere Norm-Wobbe-Index und/oder der untere und obere Betriebs-Wobbe-Index berechnet und ggf. angezeigt werden.

17. Verfahren nach einem der Ansprüche 1 bis 16, dadurch gekennzeichnet, dass eine Abgasanalyse durchgeführt wird und dass mittels der aus der Abgasanalyse berechneten Luftzahl, aus dem Verhältnis der Drosselquerschnitte der der Referenzkammer vorgeschalteten beiden Strömungswiderstände, den Druckdifferenzen über den Strömungswiderständen, den Drücken und den Temperaturen der der Referenzkammer zugeführten Teilmengen von Sauerstoffträgergas und Brennstoff der untere und obere Norm-Wobbe-Index und/oder der untere und obere Betriebs-Wobbe-Index mit einem Rechner berechnet und ggf. angezeigt werden.

18. Verfahren nach Anspruch 17, dadurch gekennzeichnet, dass zusätzlich die Dichten oder das Verhältnis der Dichten des Sauerstoffträgergases und Brennstoffes erfasst und ggf. angezeigt und der Norm-Brennwert und Norm-Heizwert und/oder der Betriebs-Brennwert und Betriebs-Heizwert mit einem Rechnet berechnet und ggf. angezigt werden.

19. Verfahren nach einem der Ansprüche 14 bis 18, dadurch gekennzeichnet, dass die Temperaturen, die Drücke oder das Verhältnis der Temperaturen und der Drücke der der Referenzbrennkammer zugeführten Teilmengenströme des Sauerstoffträgergases und des Brennstoffs konstant gehalten und/oder durch entsprechende Mengenänderungen kompensiert werden und/oder das Verhältnis der Druckdifferenzen oder die Druckdifferenzen im wesentlichen konstant geregelt werden und/oder das Verhältnis der Gastemperaturen oder die Gastemperaturen im wesentlichen konstant gehalten werden.

20. Verfahren nach den Ansprüchen 4 und 7, dadurch gekennzeichnet, dass die Beheizung der Referenzbrennkammer so geregelt wird, dass in letzterer eine bestimmte Temperatur erreicht und/oder aufrechterhalten wird und dass die für die $O_2$-Messung erfasste Temperatur gleichzeitig zur Bestimmung der Regelabweichung verwendet wird.

21. Anordnung zur Bestimmung des Mischungsverhältnisses eines ein Sauerstoffträgergas und einen Brennstoff enthaltenden Gemisches, das in einer Hauptverbrennungseinrichtung verbrannt wird, mit einer Neben-

verbrennungseinrichtung, der parallel zur Hauptverbrennungseinrichtung Teilmengen des Brennstoffes und des Sauerstoffträgergases oder eines Gemisches aus beiden zuführbar sind und in der die Teilmengen zur Reaktion bringbar sind, und mit einer Verbrennungsparameter in der Nebenverbrennungseinrichtung erfassenden Mess- und Auswerteeinrichtung, dadurch gekennzeichnet, dass die Nebenverbrennungseinrichtung als Referenzbrennkammer (9) vorgesehen und parallel zur Hauptverbrennungseinrichtung (5) derart angeordnet ist, dass in der Referenzbrennkammer unter analoger Abbildung der Verbrennung und der thermodynamischen Randbedingungen der Hauptverbrennungseinrichtung (5) ein Gemisch zur Reaktion gebracht wird, welches zu dem in der Hauptverbrennungseinrichtung (5) zur Verbrennung kommenden Gemisch analog ist.

22. Anordnung nach Anspruch 21, dadurch gekennzeichnet, dass wenigstens die Auskleidung der Referenzbrennkammer (9) aus einem temperaturbeständigen Material, vorzugsweise aus Glas oder einem keramischen Material besteht.

23. Anordnung nach Anspruch 21 oder 22, dadurch gekennzeichnet, dass die Referenzbrennkammer (9') sphärisch oder zylindrisch ausgebildet ist und Mittel (40) zum etwa tangentialen oder spiralförmigen Eindüsen des Gasgemisches in die Referenzbrennkammer vorgesehen sind.

24. Anordnung nach einem der Ansprüche 21 bis 23, dadurch gekennzeichnet, dass mit der Referenzbrennkammer (9) eine Messkammer (22) zur messtechnischen Erfassung des Verbrennungszustandes in der Referenzbrennkammer verbunden ist.

25. Anordnung nach Anspruch 24, dadurch gekennzeichnet, dass eine Zirkondioxidmesszelle (24) und ein Temperaturfühler (25) zur Erfassung des $O_2$-Anteils oder des $O_2$-Partialdrucks in die Messkammer (22) eingebaut sind.

26. Anordnung nach Anspruch 24 oder 25, dadurch gekennzeichnet, dass die Messkammer (24) und die Referenzbrennkammer (9) mit einer gemeinsamen Heizung (23) versehen, von einer Wärmeisolierung (26) umgeben und in ein gemeinsames Gehäuse (27) eingebaut sind.

27. Anordnung nach Anspruch 26, dadurch gekennzeichnet, dass die Heizung eine elektrische Heizdrahtwendel (23) ist, welche die Referenzbrennkammer (9) und die Messkammer (22) spiralförmig umgibt.

28. Anordnung nach Anspruch 26 oder 27, dadurch gekennzeichnet, dass eine elektrische Heizleiteranordnung direkt auf der Referenzbrennkammer (9) beispielsweise in Dickschichttechnik aufgebracht ist.

29. Anordnung nach einem der Ansprüche 21 bis 28, dadurch gekennzeichnet, dass in Verbindung mit einer vormischenden Hauptverbrennungseinrichtung (5) hinter der Mischeinrichtung (3) eine Probegasleitung (7) abzweigt, die eine Teilmenge des Gasgemisches über einen einstellbaren Strömungswiderstand (8) direkt zur Referenzbrennkammer (9) leitet.

30. Anordnung nach einem der Ansprüche 21 bis 29, dadurch gekennzeichnet, dass in Verbindung mit einer mündungsmischenden Hauptverbrennungseinrichtung (5, 5a) zwei Probegasleitungen (18, 19) von den mit dem Mündungsmischer (5a) verbundenen Hauptgasleitungen (1, 2) abgezweigt und jeweils über einstellbare Strömungswiderstände (20, 21) mit einem Mischer (9a) für die Referenzbrennkammer (9) verbunden sind, wobei der Mischer (9a) für die Referenzbrennkammer (9) vorzugsweise dem Mündungsmischer (5a) der Hauptverbrennungseinrichtung (5) analog nachgebildet ist.

31. Anordnung nach einem der Ansprüche 21 bis 30, dadurch gekennzeichnet, dass wenigstens eine Probegasleitung (7b, 7a) zur Abzweigung eines Teilstromes eines in der Hauptverbrennungseinrichtung (5) teilweise reagierten Gemisches von einem bestimmten Ort der Hauptverbrennungseinrichtung vorgesehen ist und dass die wenigstens eine Probegasleitung (7b, 7a) über einen einstellbaren Strömungswiderstand (8) mit der Referenzbrennkammer (9) verbunden ist.

32. Anordnung nach einem der Ansprüche 21 bis 31, dadurch gekennzeichnet, dass eine den Verbrennungszustand in der Referenzbrennkammer (9) erfassende Messeinrichtung (10) und eine dieser nachgeschaltete, einen Rechner enthaltende Auswerteeinrichtung (11) vorgesehen sind, wobei der Rechner so ausgebildet und angeordnet ist, dass er die aus der messtechnischen Erfassung des Verbrennungszustandes abgeleiteten Signale in physikalische Grössen umrechnet, Kenngrössen berechnet und in geeignete Signale umsetzt, die als Messwerte durch eine Ausgabeeinrichtung (12) angezeigt und/oder gedruckt oder als Eingabegrössen für einen Gemischregler (13) verwendet werden.

## Claims

1. A method of determining the mixing ratio of a mixture comprising an oxygen carrier gas and a fuel to be burnt in a main combustion system (5), having thermodynamic conditions namely the composition, the pressure and the temperature of said oxyden carrier gas and said fuel which may be variable before and after mixing, by using a secondary combustion system (9) wherein part of said oxygen carrier gas is reacted with a part of said fuel, at least one signal being derived from measuring the conditions of combustion in said secondary combustion system for measuring and/or controlling the mixing ratio of the main combustion system mixture characterized in that said secondary combustion system (9) is being operated as a reference combustion chamber, a mixture analogous to that being burnt in said main combustion system (5) is used for the reaction in said reference combustion chamber and said mixture is caused to react in said reference combustion chamber so that the combustion and the thermodynamic conditions in said main combustion system are modelled analogously in said reference combustion chamber.

2. A method according to claim 1 characterized in that said at least one signal for measuring and/or controlling the mixing ratio of the main combustion system mixture is derived from an analysis, by measurement, of the products of the reaction in said reference combustion chamber.

3. A method according to claim 2 characterized in that a partial stream of a mixture partly reacted in said main combustion system is caused to flow through said reference combustion chamber and conditions of combustion are measured in said reference combustion chamber to derive at least one signal for measuring and/or controlling the mixing ratio of the main combustion system mixture.

4. A method according to claim 2 or 3 characterized in that at least one signal is derived from measuring the oxygen concentration in or the oxygen partial pressure of or the concentration of an inert constituent, such as carbon dioxide, water vapor or nitrogen, in or the partial pressure of such an inert constituent of the products of reference combustion chamber reaction.

5. A method according to claim 4 characterized in that said at least one signal is also derived as a function of the carbon monoxide concentration in or the carbon monoxide partial pressure of or the concentration of any other uncombusted constituent or group of other uncombusted constituents, such as hydrogen or uncombusted hydrocarbons, in or the partial pressure of such uncombusted constituent or constituents of the products of reference combustion chamber reaction.

6. A method according to any one of claims 1 through 5 characterized in that the conditions of combustion in said reference combustion chamber are controlled as a predetermined function of temperature and/or pressure changes in said main combustion system.

7. A method according to any one of claims 1 through 6 characterized in that said reference combustion chamber is so heated that said mixture is caused in said reference combustion chamber to ignite and to react completely or reproducibly in a fashion corresponding to the fashion of the reaction in said main combustion chamber over a wide range of mixing ratios and the constituents of the products of combustion of said reference combustion chamber reaction are in their equilibriums determined by pressure and temperature.

8. A method according to any one of claims 1 through 7 characterized in that a partial stream of the mixture flowing to said main combustion system passes across an adjustable restricting device (8) or partial streams of said oxygen carrier gas and said fuel pass across adjustable restricting devices (20, 21) directly to said reference combustion chamber.

9. A method according to claim 8 characterized in that the pressure differences across said restricting devices or the ratio between said pressure differences may be measured and/or controlled.

10. A method according to any one of claims 1 through 9 characterized in that the reaction of said mixture caused in said reference combustion chamber is catalytic.

11. A method according to any one of claims 1 through 10 characterized in that mixture flow through said reference combustion chamber and hence the dwell time of the products of reaction in said reference combustion chamber are kept substantially constant.

12. A method according to any one of claims 1 through 11 characterized in that the signals derived from measuring the conditions of combustion in said reference combustion chamber are converted into physical quantities, characteristic quantities are computed therefrom and said characteristic quantities are converted into appropriate signals for displaying and/or printing measured data and/or input into a mixture controller for the main combustion system.

13. A method according to claim 12 characterized in that the air ratio of said mixture is calculated and, if desired, displayed by a computing device (11) using data from the measurement of the products of reaction in said reference combustion chamber and preferably the oxygen concentration in or the oxygen partial pressure of or the concentration of an inert constituent in or the partial pressure of such an inert constituent of said products of reaction.

14. A method according to any one of claims 1 through 13 characterized in that the volume flow rates of the partial oxygen carrier gas and fuel streams flowing to said reference combustion chamber (9) or the ratio between said flow rates are measured or determined, the products of reaction in said reference combustion chamber are analyzed and the gross calorific value and/or the net calorific value at reference conditions of the mixture caused to react in said reference combustion chamber are calculated and, if desired, displayed by a computing device (11) using the air ratio calculated from the analysis of the products of reaction.

15. A method according to claim 14 characterized in that the gross calorific value and/or the net calorific value at flowing conditions of the mixture caused to react in said reference combustion chamber are calculated and, if desired, displayed by a computing device (11) using additional measurement data or the pressure and the temperature of the fuel stream flowing to said reference combustion chamber.

16. A method according to claim 14 or 15 characterized in that the densities of said oxygen carrier gas and said fuel or the ratio between said densities are also determined and the gross and the net Wobbe numbers at reference conditions and/or the gross and the net Wobbe numbers at flowing conditions are calculated and, if desired, displayed.

17. A method according to any one of claims 1 through 16 characterized in that the products of reaction in said reference combustion chamber are analyzed and the air factor computed from the data of said analysis, the ratio of the cross sections of the restricting devices upstream from said reference combustion chamber, the pressure differences across said restricting devices and the pressures and the temperatures of the partial oxygen carrier gas and fuel streams to said reference combustion chamber are processed by a computing device to calculate and, if desired, display the gross and the net Wobbe numbers at reference conditions and/or the gross and the net Wobbe numbers at flowing conditions of the mixture caused to react.

18. A method according to claim 17 characterized in that the densities of the oxygen carrier gas and the fuel or the ratio between said densities are also determined and, if desired, displayed and the gross calorific value and the net calorific value at reference conditions and/or the gross calorific value and the net calorific value at flowing conditions of the mixture caused to react are calculated and, if desired, displayed by a computing device.

19. A method according to any one of claims 14 through 18 characterized in that the temperatures and the pressures or the ratios between the temperatures and the pressures of the partial oxygen carrier gas and fuel streams flowing to said reference combustion chamber are kept constant and/or that any variations thereof are made up for by corresponding changes in flow and/or the ratio between the pressure differences or the pressure differences are controlled to remain substantially constant and/or the ratio between the gas temperatures or the gas temperatures are kept substantially constant.

20. A method according to claims 4 and 7 characterized in that the heating device for said reference combustion chamber is so controlled that a given temperature is achieved and/or maintained therein and the temperature determined for oxygen measurement is also used to determine setpoint temperature deviation.

21. A device for determining the mixing ratio of a mixture comprising an oxygen carrier gas and a fuel to be burnt in a main combustion system, said device comprising a secondary combustion system arranged parallel with said main combustion system and allowing a partial stream of said fuel and said oxygen carrier gas or of a mixture of said fuel and said oxygen carrier gas to be fed into said secondary combustion system and to react therein and further comprising a measuring and processing device for determining the conditions of combustion in said secondary combustion system characterized in that said secondary combustion system is provided as a reference combustion chamber (9) and arranged parallel with said main combustion system (5) so that as mixture analogous to that being burnt in said main combustion system (5) is caused to react in said reference combustion chamber modelling analogously the combustion and the thermodynamic conditions in said main combustion chamber (5).

22. A device according to claim 21 characterized in that at least the lining of said reference combustion chamber (9) is made from a temperature-resistant material and preferably from glass or a ceramic material.

23. A device according to claim 21 or 22 characterized in that the reference combustion chamber (9) is of a spherical or a cylindrical shape and means (40) are provided for the substantially tangential or cyclonic injection of the mixture into said reference combustion chamber.

24. A device according to any one of claims 21 through 23 characterized in that a measuring chamber (22) for measuring the conditions of combustion in said reference combustion chamber (9) is connected with said reference combustion chamber.

25. A device according to claim 24 characterized in that said measuring chamber (22) is provided with a zirconium dioxide sensor (24) and a temperature sensor (25) for determining the oxygen concentration or the oxygen partial pressure.

26. A device according to claim 24 or 25 characterized in that said measuring chamber (22) and said reference combustion chamber (9) are provided with a common heater (23), surrounded by thermal insulation material (26) and accommodated in a common housing (27).

27. A device according to claim 26 characterized in that said heater is a heater coil (23) arranged spirally around said reference combustion chamber (9) and said measuring chamber (22).

28. A device according to claim 26 or 27 characterized in that said heater is mounted directly on said reference combustion chamber (9) for example by thick-film application.

29. A device according to any one of claims 21 through 28 characterized in that a sample gas line (7) is in the case of a premixed main combustion system (5) branched off the line connecting the mixer (3) and said main combustion system, said sample gas line carrying a partial stream of the mixture across an adjustable restricting device (8) directly to said reference combustion chamber (9).

30. A device according to any one of claims 21 through 29 characterized in that two samples gas lines (18, 19) are in the case of an atmospheric main combustion system (5, 5a) branched off the main lines (1, 2) to the atmospheric combustion device (5a) of said atmospheric combustion system, each such sample gas line being connected with a mixer (9a) serving said reference combustion chamber across adjustable restricting devices (20, 21), said mixer (9a) preferably modelling said atmospheric combustion device (5a) of said main combustion system.

31. A device according to any one of claims 21 through 30 characterized in that at least one sample gas line (7b, 7a) is provided for tapping a partial stream of a mixture partially reacted in said main combustion system (5) from a given point in said main combustion system and said at least one sample gas line (7b, 7a) is connected with said reference combustion chamber (9) across an adjustable restricting device (8).

32. A device according to any one of claims 21 through 31 characterized in that said device is provided with a measuring device (10) for determining the conditions of combustion in said reference combustion chamber (9) and downstream therefrom is further provided with a processing device (11) comprising a computing device, said computing device being arranged so that it converts the signals derived from the measurement of the conditions of combustion into physical quantities and computes characteristic quantities therefrom and converts said characteristics and quantities into appropriate signals for displaying and/or printing measured data by an output device (12) or input into a mixture controller (13).

## Revendications

1. Méthode pour déterminer le rapport d'un mélange composé d'un gaz vecteur d'oxygène et d'un carburant destiné à être brûlé dans un système de combustion principal (5), les caractéristiques thermodynamiques, c'est-à-dire la composition, la pression et la température soit du mélange soit du gaz vecteur d'oxygène et du carburant pouvant varier avant et après l'opération de mélange, en utilisant un système de combustion secondaire (2) où une partie du carburant est amenée à réagir avec une partie du gaz vecteur d'oxygène, la mesure des conditions de la combustion dans le système de combustion secondaire permettant d'obtenir au moins un signal pour mesurer et/ou régler le rapport du mélange alimentant le système de combustion principal, caractérisé par le fait que le système de combustion secondaire (2) sert de chambre de combustion de référence, que le mélange réagissant dans la chambre de combustion de référence est analogue à celui utilisé pour la combustion dans le système de combustion principal (5) et que le mélange est amené à réagir dans la chambre de combustion de référence de façon à modeler par analogie la combustion et les caractéristiques thermodynamiques dans le système de combustion principal.

2. Méthode selon la revendication 1, caractérisé par le fait qu'au moins un signal comme mentionné dans la revendication 1 est obtenu par l'analyse technique de produits de la réaction dans la chambre de combustion de référence pour mesurer et/ou régler le rapport du mélange alimentant le système de combustion principal.

3. Méthode selon la revendication 2, caractérisé par le fait qu'un courant partiel du mélange, après réaction partielle dans le système de combustion principal, passe dans la chambre de combustion de référence et que les conditions de la combustion dans la chambre de combustion de référence sont déterminées par des mesures pour obtenir au moins un signal pour la mesure et/ou le réglage du rapport du mélange alimentant le système de combustion principal.

4. Méthode selon l'une quelconque des revendications 2 ou 3, caractérisé par le fait qu'au moins un signal est obtenu à partir de la mesure de la teneur en $O_2$ ou de la pression partielle d'$O_2$ ou de la teneur ou de la pression partielle d'une composante inerte, telle que par exemple le $CO_2$, le $H_2O$ ou le $H_2$ des produits de la réaction ayant lieu dans la chambre de combustion de référence.

5. Méthode selon la revendication 4, caractérisé par le fait que le signal s'obtient, en outre, en fonction de la teneur en CO ou de la pression partielle de CO ou de la teneur ou de la pression partielle d'une ou de plusieurs autres composantes imbrûlées, telles que, par exemple, le $H_2$ et les hydrocarbures imbrûlées des produits de la réaction.

6. Méthode selon l'une quelconque des revendications 1 à 5, caractérisé par le fait que les conditions de la combustion dans la chambre de combustion de référence sont réglées en fonction des modifications de la température et/ou de la pression règnant dans le système de combustion principal.

7. Méthode selon l'une quelconque des revendications 1 à 6, caractérisé par le fait que la chambre de combustion de référence est chauffée de façon à ce que le mélange dans cette chambre est allumé dans une plage étendue de rapports de mélange amenant ainsi une réaction complète ou une réaction qui est analogue, de manière reproductible, à la réaction dans le système de combustion principal et que les composantes des produits de la réaction se trouvent à l'équilibre déterminé par la pression et la température.

8. Méthode selon l'une quelconque des revendications 1 à 7, caractérisé par le fait qu'une partie du mélange s'écoulant vers le système de combustion principal passe par une résistance d'écoulement réglable (8) directement dans la chambre de combustion de référence, ou qu'une partie du gaz vecteur d'oxygène et du carburant passe par des résistances d'écoulement réglables (20, 21) dans la chambre de combustion de référence.

9. Méthode selon la revendication 8, caractérisé par le fait que les différences de pression ou le taux des différences de pression au niveau des résistances d'écoulement sont mesurés et/ou ajustés.

10. Méthode selon l'une quelconque des revendications 1 à 9, caractérisé par le fait que la réaction du mélange provoqué dans la chambre de combustion de référence est une réaction catalytique.

11. Méthode selon l'une quelconque des revendications 1 à 10, caractérisé par le fait que le débit du mélange traversant la chambre de combustion de référence, et par conséquent le séjour des produits de la réaction dans la chambre de combustion de référence, sont maintenus quasiment constants.

12. Méthode selon l'une quelconque des revendications 1 à 11, caractérisé par le fait que les signaux obtenus à partir de la mesure des conditions de la combustion à l'intérieur de la chambre de combustion de référence sont convertis en grandeurs physiques, que des grandeurs caractéristiques sont calculées et converties en des signaux appropriés, ces derniers servant à afficher et/ou à imprimer les valeurs mesurées et/ou étant utilisés comme grandeurs d'entrée pour régler le rapport du mélange alimentant le système de combustion principal.

13. Méthode selon la revendication 12, caractérisé par le fait qu'à partir des résultats des mesures des produits de la réaction, de préférence de la teneur en $O_2$ ou de la pression partielle d'$O_2$ ou de la teneur en un produit inerte ou de la pression partielle d'un produit inerte de la réaction, le taux d'aération est déterminé par un ordinateur (11) et éventuellement affiché.

14. Méthode selon l'une quelconque des revendications 1 à 13, caractérisé par le fait que les débits partiels de gaz vecteur d'oxygène et de carburant amenés à la chambre de combustion de référence (9) ou le rapport de ces débits partiels sont mesurés ou déterminés, qu'une analyse des produits de combustion est effectuée et qu'à partir du taux d'aération déterminé à partir de l'analyse des produits de combustion sont calculés par ordinateur (11) et éventuellement affichés le pouvoir calorifique supérieur et/ou le pouvoir calorifique inférieur dans les conditions de référence.

15. Méthode selon la revendication 14, caractérisé par le fait qu'à partir de mesures complémentaires ou en tenant compte de la pression, de la température et du débit de carburant amené à la chambre de combustion de référence sont calculés par ordinateur et éventuellement affichés le pouvoir calorifique supérieur et le pouvoir calorifique inférieur dans les conditions d'exploitation.

16. Méthode selon l'une quelconque des revendications 14 ou 15, caractérisé par le fait qu'en plus, les densités ou le rapport des densités du gaz vecteur d'oxygène et du carburant sont déterminés et que l'indice de Wobbe inférieur et supérieur dans les conditions de référence et/ou l'indice de Wobbe inférieur et supérieur dans les conditions d'exploitation sont calculés par ordinateur et éventuellement affichés.

17. Méthode selon l'une quelconque des revendications 1 à 16, caractérisé par le fait qu'il est procédé à une analyse des produits de combustion et qu'à l'aide du taux d'aération déterminé par cette analyse, à l'aide du rapport entre la section étranglée de chacune des deux résistances d'écoulement placées à l'amont de la chambre de combustion de référence et à l'aide des différences de la pression au niveau des résistances d'écoulement, des pressions et des températures des débits partiels de gaz vecteur d'oxygène et de carburant, amenés à la chambre de combustion de référence, sont calculés par ordinateur et éventuellement affichés l'indice de Wobbe inférieur et supérieur dans les conditions de référence et/ou l'indice de Wobbe inférieur et supérieur dans les conditions d'exploitation.

18. Méthode selon la revendication 17, caractérisé par le fait qu'en plus sont déterminés et éventuellement affichés les densités ou le rapport des densités du gaz vecteur d'oxygène et du carburant et calculés par ordinateur et éventuellement affichés le pouvoir calorifique supérieur et le pouvoir calorifique inférieur dans les conditions de référence et/ou le pouvoir calorifique supérieur et le pouvoir calorifique inférieur dans les conditions d'exploitation.

19. Méthode selon l'une quelconque des revendications 14 à 18, caractérisé par le fait que les températures, les pressions ou le rapport des températures et le rapport des pressions des débits partiels de gaz vecteur d'oxygène et de carburant amenés à la chambre de combustion de référence sont maintenus constants et/ou les changements sont compensés par des variations de débit correspondantes et/ou que le rapport des différences de la pression ou les différences de pression sont réglés de façon quasiment constante et/ou que le rapport des températures de gaz ou que les températures de gaz sont maintenus quasiment constants.

20. Méthode selon les revendications 4 et 7, caractérisé par le fait que le chauffage de la chambre de combustion de référence est réglé de façon à ce qu'une température déterminée est atteinte et/ou maintenue dans cette dernière et que la température mesurée pour déterminer la teneur en $O_2$ sert en même temps à déterminer d'écarts du rapport de mélange.

21. Dispositif pour déterminer le rapport d'un mélange composé d'un gaz vecteur d'oxygène et d'un carburant destiné à être brûlé dans un système de combustion principal comportant un système de combustion secondaire auquel sont amenés parallèlement au système de combustion principal des courants partiels du carburant et du gaz vecteur d'oxygène ou d'un mélange des deux pour y être portés à réaction, et comportant également un équipement de mesure et d'analyse des conditions de la combustion relevées dans le système de combustion secondaire, caractérisé par le fait que le système de combustion secondaire est prévu comme une chambre de combustion de référence (9) disposée en parallèle au système de combustion principal (5), de façon que dans la chambre de combustion de référence, modelant par analogie la combustion et les caractéristiques thermodynamiques du système de combustion principal (5), un mélange est amené à réaction et que le mélange est analogue à celui brûlé dans le système de combustion principal (5).

22. Dispositif selon la revendication 21, caractérisé par le fait qu'au moins le garnissage de la chambre de combustion de référence (9) est constitué d'un matériau résistant aux hautes températures, de préférence en verre ou en céramique.

23. Dispositif selon l'une quelconque des revendications 21 ou 22, caractérisé par le fait que la chambre de combustion de référence (9') est. de forme sphérique ou cylindrique et qu'il a été prévu des moyens (40) permettant l'injection quasiment tangentielle ou en cyclone du mé-. lange dans la chambre de combustion de référence.

24. Dispositif selon l'une quelconque des revendications 21 à 23, caractérisé par le fait que la chambre de combustion de référence (9) est liée à une chambre de mesure (22) permettant de mesurer les conditions de la combustion dans la chambre de combustion de référence.

25. Dispositif selon la revendication 24, caractérisé par le fait que la chambre de mesure (22) est équipée d'une sonde au zircone (24) et d'un palpeur de température (25) pour mesurer la teneur en $O_2$ ou la pression partielle d'$O_2$ du mélange.

26. Dispositif selon l'une quelconque des revendications 24 ou 25, caractérisé par le fait que la chambre de mesure (22) et la chambre de combustion de référence (9) sont équipées d'un chauffage (23) commun, muni d'un calorifugeage (26) et qu'elles sont logées dans un carter (27).

27. Dispositif selon la revendication 26, caractérisé par le fait que le chauffage est un conducteur électrique (23) entourant la chambre de combustion de référence (9) et la chambre de mesure (22) en forme de spirale.

28. Dispositif selon l'une quelconque des revendications 26 ou 27, caractérisé par le fait que les conducteurs électriques sont disposés directement dans la paroi de la chambre de combustion de référence (9) par exemple en couche épaisse.

29. Dispositif selon l'une quelconque des revendications 21 à 28, caractérisé par le fait que dans le cas où le système de combustion principal (5) est muni d'un dispositif de prémélange (3), une conduite de gaz d'analyse (7) part en aval de ce dispositif de prémélange (3) pour amener une partie du mélange par l'intermédiaire d'une résistance d'écoulement réglable (8) directement à la chambre de combustion de référence (9).

30. Dispositif selon l'une quelconque des revendications 21 à 29, caractérisé par le fait que dans le cas où le mélange se fait au niveau du système de combustion principal (5, 5a) deux conduites de gaz d'essai (18, 19) partent des conduites de gaz principales (1, 2) pour être liées chacune par l'intermédiaire d'une résistance d'écoulement réglable (20, 21) avec un mélangeur (9a) de la chambre de combustion de référence (9), le mélangeur (9a) pour la chambre de combustion de référence (9) étant de préférence modelé sur le dispositif correspondant (5a) du système de combustion principal (5).

31. Dispositif selon l'une quelconque des revendications 21 à 30, caractérisé par le fait qu'il est prévu au moins une conduite de gaz d'analyse (7b, 7a) pour soutirer une partie d'un mélange partiellement réagi dans le système de combustion principal (5) d'un point donné du système de combustion principal et que la ou les conduites (7b, 7a) sont par l'intermédiaire d'une résistance d'écoulement réglable (8) connectés avec la chambre de combustion de référence (9).

32. Dispositif selon l'une quelconque des revendications 21 à 31, caractérisé par le fait qu'il a été prévu un système de mesure (10) pour déterminer les conditions de combustion dans la chambre de combustion de référence (9) et en aval du système de mesure un système d'analyse (11) comprenant un ordinateur, ce dernier étant conçu et disposé de façon à pouvoir convertir en des grandeurs physiques les signaux obtenus à partir des mesures des conditions de la combustion, à calculer des grandeurs caractéristiques et à les transformer en des signaux appropriés qui pourront être affichés en tant que valeurs mesurées par un dispositif d'affichage (12) et/ou imprimées ou utilisées pour être introduites dans un régulateur du mélange (13).

EP 0 156 200 B1

$P_1, T_1, c_{i_1}$

$P_2, T_2, c_{i_2}$

$P_5, T_5, c_{i_5}$

$P_g, T_g, c_{i_g}$

MESSEIN-RICHTUNG

AUSWERTUNG (RECHNER)

AUSGABE

GEMISCH-REGLER

Fig. 1

Fig. 2

$P_5, T_5, c_{i5}$

$P_9, T_9, c_{i9}$

MESSEIN-RICHTUNG

AUSWERTUNG (RECHNER)

AUSGABE

GEMISCH-REGLER

EP 0 156 200 B1

Fig. 3A

Fig. 3B

Fig. 4